# EUROPÄISCHE PATENTSCHRIFT

(11) **EP 4 556 160 B1**
(45) Veröffentlichungstag und Bekanntmachung des Hinweises auf die Patenterteilung: **03.09.2025**
(21) Anmeldenummer: 23209944.0
(22) Anmeldetag: 15.11.2023
(51) Int. Cl.: B23Q 16/10, B23Q 1/00

(54) **KIT FÜR EINE KLEMM- UND/ODER BREMSVORRICHTUNG**
KIT FOR A CLAMPING AND/OR BRAKING DEVICE
KIT POUR DISPOSITIF DE SERRAGE ET/OU DE FREINAGE

(43) Veröffentlichungstag der Anmeldung: 21.05.2025
(73) Patentinhaber: HEMA Maschinen- und Apparateschutz GmbH, 63500 Seligenstadt (DE)
(72) Erfinder: Likus, Edmund, 63500 Seligenstadt (DE)
(74) Vertreter: Herrmann, Daniel

(56) Entgegenhaltungen:
- EP-A2- 0 214 452
- US-B1- 6 179 063

## Beschreibung

### TECHNISCHES GEBIET

Die Erfindung betrifft ein Kit für eine Klemm- und/oder Bremsvorrichtung mit einem Käfig, sowie eine pneumatische Klemm- und/oder Bremsvorrichtung.

### HINTERGRUND DER ERFINDUNG

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Elemente, insbesondere federnde Platten, mit Druckluft beaufschlagt und können einige der genannten Nachteile von hydraulischen Klemmvorrichtungen überwinden.

EP 1 585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich gezeigt, dass das Einleiten des Druckmediums in den Druckraum zwischen den Federplatten manchmal nicht verlässlich genug erreicht werden kann. Auch hat sich in der Praxis gezeigt, dass die Klemmvorrichtungen in axialer Richtung von beiden Seiten, ggf. wechselweise, mit Druckmedium beaufschlagbar sein sollen.

EP 0214452 A2 offenbart einen Käfig umfassend: zwei Grundflächen; eine sich zwischen den beiden Grundflächen erstreckende und diese Grundflächen miteinander verbindende Mantelfläche; und einen Innenraum, der durch die zwei Grundflächen und die Mantelfläche zusammen abgegrenzt wird, wobei ein oder mehrere der Grundflächen eine Öffnung für einen Anschluss zum Einleiten eine Druckmediums in den Innenraum aufweist, wobei die Mantelfläche ein oder mehrere Öffnungen zum Weiterleiten des Druckmediums aus dem Innenraum in den Druckraum aufweist.

US 6,179,063 B1 offenbart einen Impulsschlüssel zur Verwendung in Verbindung mit einem Befestigungswerkzeug und einer Stromversorgung zum selektiven Drehen von Gewindebefestigungen.

### KURZBESCHREIBUNG DER ERFINDUNG

Ausgehend von dem eingangs genannten Stand der Technik liegt der Erfindung die Aufgabe zugrunde, Mittel bereitzustellen, die ein verlässliches Einleiten des Druckmediums in einen Druckraum der Klemm- und/oder Bremsvorrichtung ermöglichen, insbesondere bei axial zweiseitig vorliegenden Anschlüssen für das Druckmedium.

Die Erfindung löst diese Aufgabe mit einem Kit mit den Merkmalen des Patentanspruchs 1 und mit einer Klemm- und/oder Bremsvorrichtung mit den Merkmalen des Patentanspruchs 11. Einige der bevorzugten Ausführungsformen sind in den abhängigen Ansprüchen, in der Beschreibung und in den Figuren beschrieben.

Entsprechend der erfindungsgemäßen Lösung wird ein Kit für eine Klemm- und/oder Bremsvorrichtung vorgeschlagen, das Kit umfassend: der im Folgenden beschrieben erfindungsgemäße Käfig; eine Verschlussschraube; ein Gehäuseteil, umfassend: eine Anschlussöffnung; und ein an dem Gehäuseteil im Bereich der Anschlussöffnung angeordnetes Gewinde für das Eindrehen der Verschlussschraube zum Verschließen der Anschlussöffnung.

Der Käfig ist zur Einleitung eines Druckmediums in einen Druckraum der pneumatischen Klemm- und/oder Bremsvorrichtung, wobei der Käfig umfasst: zwei Grundflächen; eine sich zwischen den beiden Grundflächen erstreckende und diese Grundflächenmiteinander verbindende Mantelfläche; und einen Innenraum, der durch die zwei Grundflächen und die Mantelfläche zusammen abgegrenzt wird, wobei ein oder mehrere der Grundflächen eine Öffnung für einen Anschluss der Klemm- und/oder Bremsvorrichtung zum Einleiten des Druckmediums in den Innenraum aufweist, und wobei die Mantelfläche ein oder mehrere Öffnungen zum Weiterleiten des Druckmediums aus dem Innenraum in den Druckraum aufweist.

Der Käfig ist bevorzugt frei von Befestigungsmitteln (z.B. ein Gewinde das beispielsweise an einem Vorsprung einer der Grundflächen angebracht ist) für ein Befestigen einer Verschlussschraube zum Verschließen einer Anschlussöffnung (in einem Gehäuse der Klemm- und/oder Bremsvorrichtung) für den Anschluss.

Durch die mindestens eine Öffnung in der Mantelfläche und die mindestens eine Grundfläche mit einer Öffnung für den Anschluss der Vorrichtung ermöglicht der Käfig, dass das an dem Anschluss bereitgestellte Druckmedium durch die Öffnung in der Grundfläche in den Innenraum des Käfig gelangt und von dort durch die Öffnung in der Mantelfläche in den Druckraum weitergeleitet werden kann, wenn der Käfig zwischen zwei elastischen Elementen der Vorrichtung angeordnet ist, wo sich auch der Druckraum befindet. Der Käfig bewirkt eine axiale Stabilisierung bzw. Fixierung der elastischen Elemente und ermöglicht ein verlässliches Einleiten des Druckmediums durch den Käfig in den Druckraum hinein. Dadurch, dass der Käfig bevorzugt frei ist von Befestigungsmitteln für ein Befestigen einer Verschlussschraube zum Verschließen einer Anschlussöffnung für den Anschluss. wird verhindert, dass sich beim Auf- bzw. Zudrehen einer Verschlussschraube, z.B. im Zuge eines Wechsels der Seite von der die Vorrichtung mit Druckmedium beaufschlagt werden soll, eine Beschädigung der elastischen Elemente, insbesondere deren Dichtungsschichten bzw. Anschlussdichtungen, ergeben kann (z.B. bei eingeklebter oder anderweitig blockierter Verschlussschraube). Bevorzugt ist an dem Käfig kein Gewinde für das Eindrehen der Verschlussschraube für die Anschlussöffnung angebracht, um ein Mitdrehendes Käfigs und eine dadurch bedingte Beschädigung der elastischen Elemente zu verhindern.

Bevorzugt hat jede der Grundflächen eine Öffnung für einen Anschluss zum Aufschlagen der Vorrichtung mit einem Druckmedium. Diesen Fall ermöglicht der Käfig einen abwechselnden Betrieb der Art, dass das Druckmedium in axialer Richtung - je nach Anwendung - in einer von zwei verschiedenen Seiten in die Vorrichtung eingeführt werden kann, ohne, dass dadurch an den elastischen Elementen oder dem Käfig eine Anpassung vorgenommen werden müsste. Es gib in diesem Fall für beide Anschlussseiten eine Öffnung in einer Grundfläche zum Einleiten des Druckmediums in den Innenraum des Käfig, so dass das Druckmedium von dort durch die Öffnung in der Mantelfläche in den Druckraum weitergeleitet werden kann. Durch eine Maßnahme, nämlich den Käfig, werden so zwei Vorteile gleichzeitig realisiert, nämlich ein verlässliches Einleiten des Druckmediums in den Druckraum und ein zweiseitiger Betrieb der Vorrichtung in axialer Richtung.

Bevorzugt sind eine oder mehrere der Grundflächen über die Mantelfläche auskragend. Der auskragende Bereich der Grundflächen bewirkt eine verbesserte axiale Stabilisierung der elastischen Elemente und stellt darüber hinaus ein besonders verlässliches Einleiten des Druckmediums aus dem Innenraum durch die Öffnung der Mantelfläche in den Druckraum sicher.

Bevorzugt sind die ein oder mehreren Öffnungen in der Mantelfläche eine Vielzahl von Öffnungen in der Mantelfläche, die zumindest teilweise an verschiedenen, vorzugsweise aneinandergrenzenden oder sich gegenüberliegenden, Abschnitten der Mantelfläche angeordnet sind. Dies möglichst einer besonders effektive Weiterleitung des Druckmediums aus dem Innenraum des Käfigs in den Druckraum hinein. Ferner ermöglicht dies, dass größere Toleranzen bei der Positionierung des Käfigs innerhalb der Vorrichtung erzielt werden. Sind die Öffnungen der Vielzahl von Öffnungen in der Mantelfläche rotationssymmetrisch (um eine senkrecht durch die Grundflächen verlaufende Achse des Käfigs) in der Mantelfläche verteilt, so werden diese Toleranzen maximiert.

Bevorzugt ist die Ausdehnung des Käfigs von der ersten Grundfläche (einschließlich) über die Mantelfläche bis zur zweiten Grundfläche (einschließlich) weniger als 30 mm, weniger als 27 mm, weniger als 25 mm oder weniger als 23 mm (z.B. maximal 22 mm). Mit anderen Worten erstreckt sich die Mantelfläche um eine Höhenachse des Käfigs und die Ausdehnung des Käfigs entlang der Höhenachse beträgt weniger als 30 mm, weniger als 27 mm, weniger als 25 mm oder weniger als 23 mm (z.B. maximal 22 mm). Die Höge des Käfigs ist also weniger als 30 mm, weniger als 27 mm, weniger als 25 mm oder weniger als 23 mm (z.B. maximal 22 mm). Die Grundflächen können sich in ein oder mehreren Ebenen quer zur Höhenachse erstrecken.

Durch eine solche Begrenzung der Ausdehnung des Käfigs wird besonders verlässlich verhindert, dass im Zusammenbau die axialen Kräfte auf die beiden Plananlagen der Dichtungen (z.B. Gummierungen) an den elastischen Elementen (insb. im Bereich deren Anschlussdichtungen) und das Einschneiden in die Dichtungen( z.B. Gummierungen) durch den (auskragenden) Rand des Käfigs eliminiert werden. Der so modifizierte Käfig verdrängt nur das notwendige Volumen der Dichtungen (Gummierungen), ohne dass es zu Aufwölbungen an den Rändern und problematischen Reduktionen der Querschnitte für die Zufuhr bzw. Abfuhr des Druckmediums in den Druckraum kommt.

Der Käfig kann eine zylindrische oder kreiszylindrische Form aufweisen. Die zwei Grundflächen können (im Wesentlichen) parallel zueinander verlaufen. Die Mantelfläche kann die zwei Grundflächen schneiden und/oder kann (im Wesentlichen) senkrecht zu den Grundflächen verlaufen.

Bevorzugt ist das Gewinde für die Verschlussschraube von dem Käfig getrennt an dem Gehäuseteil angeordnet (z.B. kann das Gewinde direkt durch eine Innenfläche des Gehäuseteils definiert sein oder das Gewinde ist mittels eines an einer solchen Innenfläche befestigten Kopplungselements definiert). Dadurch wird verhindert, dass sich beim Auf- bzw. Zudrehen einer Verschlussschraube, z.B. im Zuge eines Wechsels der Seite von der die Vorrichtung mit Druckmedium beaufschlagt werden soll, eine Beschädigung der elastischen Elemente, insbesondere deren Dichtungsschichten bzw. Anschlussdichtungen, ergeben kann (z.B. bei eingeklebter oder anderweitig blockierter Verschlussschraube).

Entsprechend der erfindungsgemäßen Lösung wird ferner eine Klemm- und/oder Bremsvorrichtung zum Klemmen und/oder Bremsen eines zu klemmenden und/oder bremsenden Objekts bereitgestellt, wobei in der Vorrichtung Folgendes umfasst: ein erfindungsgemäßes Kit, bei dem dessen Anschlussöffnung durch Eindrehen der Verschlussschraube in das Gewinde verschlossen ist und bei dem dessen elastisches Element zum Abdichten des Gehäuseteils zwischen dem Käfig und der Verschlussschraube angeordnet ist; ein weiteres Gehäuseteil mit einer Anschlussöffnung für den Anschluss der Klemm- und/oder Bremsvorrichtung zum Beaufschlagen des Druckraumes mit dem Druckmedium; und ein weiteres elastisches Element zum Abdichten des weiteren Gehäuseteils; wobei die Gehäuseteile zusammen ein Gehäuse bilden und derart zueinander angeordnet und miteinander befestigt sind, dass Innenflächen der Gehäuseteile zusammen einen Gehäuseinnenraum innerhalb des Gehäuses abgrenzen; ein oder mehrere Klemmelemente, wobei jedes Klemmelement eine Klemmfläche aufweist; eine in dem Gehäuseinnenraum angeordnete Feder umfassend die elastischen Elemente, wobei innerhalb des Gehäuseinnenraums jedes der elastischen Elemente derart in einem anderen der Gehäuseteilen eingeklemmt ist, dass in dem Gehäuseinnenraum der Druckraum zwischen den eingeklemmten elastischen Elementen gebildet wird, wobei der Käfig derart zwischen den eingeklemmten elastischen Elementen angeordnet ist, dass sich die Mantelfläche des Käfigs von einem der elastischen Elemente zu dem anderen der elastischen Elemente erstreckt und der Druckraum über die Öffnungen in der Mantelfläche, die Öffnung zumindest einer der Grundflächen und die Anschlussöffnung des weiteren Gehäuseteils entlüftbar ist und belüftbar oder mit Überdruck eines Druckmediums beaufschlagbar ist, wobei die Feder ausgelegt ist, dass bei Be- oder Entlüften des Druckraums oder Beaufschlagung des Druckraums mit Überdruck, eine Biegung mindestens einer der elastischen Elemente veränderbar ist und dadurch die Vorrichtung zwischen einem geöffneten Zustand, in dem ein zu klemmendes Objekt von den ein oder mehreren Klemmflächen beabstandet ist, und einem geschlossenen Zustand, in dem mindestens eine der ein oder mehreren Klemmflächen eine Klemm- und/oder Bremskraft auf das Objekt übertragen, wechselt.

Dadurch, dass der Käfig derart zwischen den eingeklemmten elastischen Elementen angeordnet ist, dass sich die Mantelfläche des Käfigs von einem der elastischen Elemente zu dem anderen der elastischen Elemente erstreckt und der Druckraum über die Öffnungen in der Mantelfläche, die Öffnung zumindest einer der Grundflächen und die Anschlussöffnung des weiteren Gehäuseteils entlüftbar ist und belüftbar oder mit Überdruck eines Druckmediums beaufschlagbar ist, wird axiale Fixierung der elastischen Elemente, ein verlässliches Einleiten des Druckmediums in den Druckraum hinein, und eine verbesserte Abdichtung erzielt.

Vorzugsweise weist jedes der elastischen Elemente eine Dichtungsschicht mit einer Anschlusssichtung auf und der Käfig ist derart zwischen den Anschlussdichtungen der eingeklemmten elastischen Elemente angeordnet, dass die Anschlussdichtungen die, vorzugsweise auskragenden Bereiche der Grundflächen des Käfigs gegen die Gehäuseteile abdichten. dadurch wird eine besonders gute Abdichtung an den Übergängen von Gehäuseteilen, elastischen Elementen und Käfig erzielt. Der auskragende Bereich der Grundflächen bewirkt eine verbesserte axiale Stabilisierung der elastischen Elemente und stellt darüber hinaus ein besonders verlässliches Einleiten des Druckmediums mit verringerten Verlustkanälen aus dem Innenraum durch die Öffnung der Mantelfläche in den Druckraum her.

Das lange Zeit nicht überwundene Problem des störanfälligen Einleitens des Druckmediums in den Druckraum zwischen den elastischen Elementen konnte durch diese Erfindung überwunden werden. Durch die hier beschriebenen Mitteln einzeln und in Kombination können Klemm- und/oder Bremsvorrichtungen bereitgestellt werden, die ein verlässliches Einleiten des Druckmediums in den Druckraum ermöglichen und gleichzeitig eine Basis dafür schaffen, dass die Vorrichtung in axialer Richtung von verschiedenen Seiten mit Druckmedium beaufschlagt werden kann, und zwar beides ohne, dass dadurch die Dynamik der Klemm- und/oder Bremsvorrichtung beeinträchtigt oder diese beschädigt würde.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine nach innen gerichtete erfindungsgemäße pneumatische Klemm- und/oder Bremsvorrichtung in dreidimensionaler Darstellung.
Figuren 5B bis 5D zeigen eine Variante eines aus Figur 5A entnommenen Gehäuseteils mit elastischem Element.
Figur 6 zeigt eine Ausführung eines erfindungsgemäßen Käfigs.
Figur 7 zeigt ein Ausschnitt eines Querschnitts einer erfindungsgemäßen Klemm- und/oder Bremsvorrichtung mit dem erfindungsgemäßen Käfig aus Figur 6.

Bauteile, die in mehreren Figuren dargestellt sind, tragen dieselben Referenzzeichen.

### DETAILLIERTE BESCHREIBUNG

Die Erfindung betrifft ein Kit für eine pneumatische Klemm- und/oder Bremsvorrichtung und eine pneumatische Klemm- und/oder Bremsvorrichtung mit solch einem Kit.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

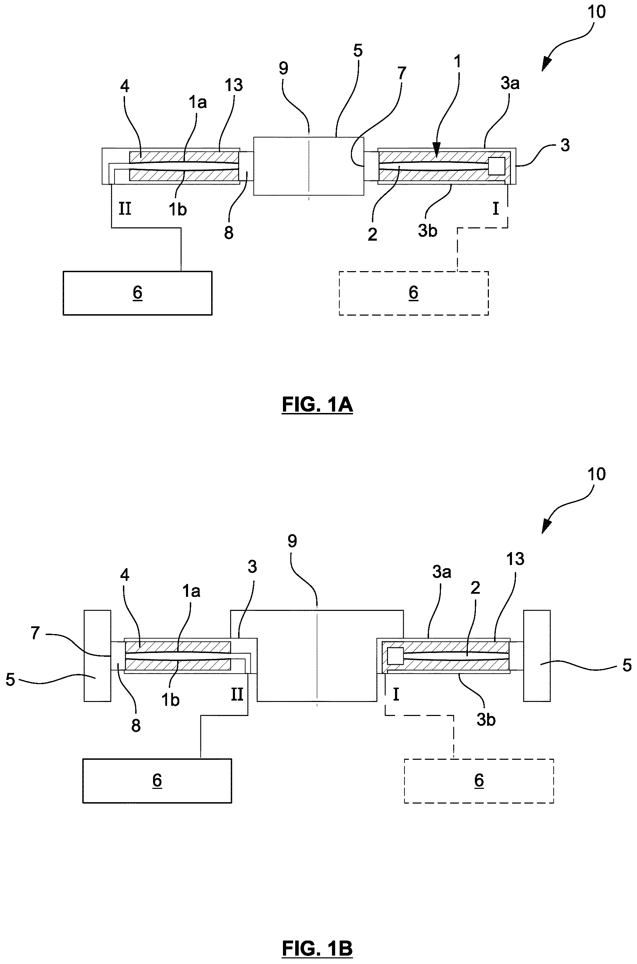

Die Figuren 1A bis 5A und 8 zeigen schematisch Querschnitte durch eine solche erfindungsgemäße Klemmvorrichtung 10 mit einem Gehäuse 3, das zwei Gehäuseteile 3a, 3b umfasst, sowie mit einer in dem Gehäuse 3 angeordneten Feder 1, die mindestens zwei erfindungsgemäße ringförmige elastische Elemente 1a, 1b umfasst.

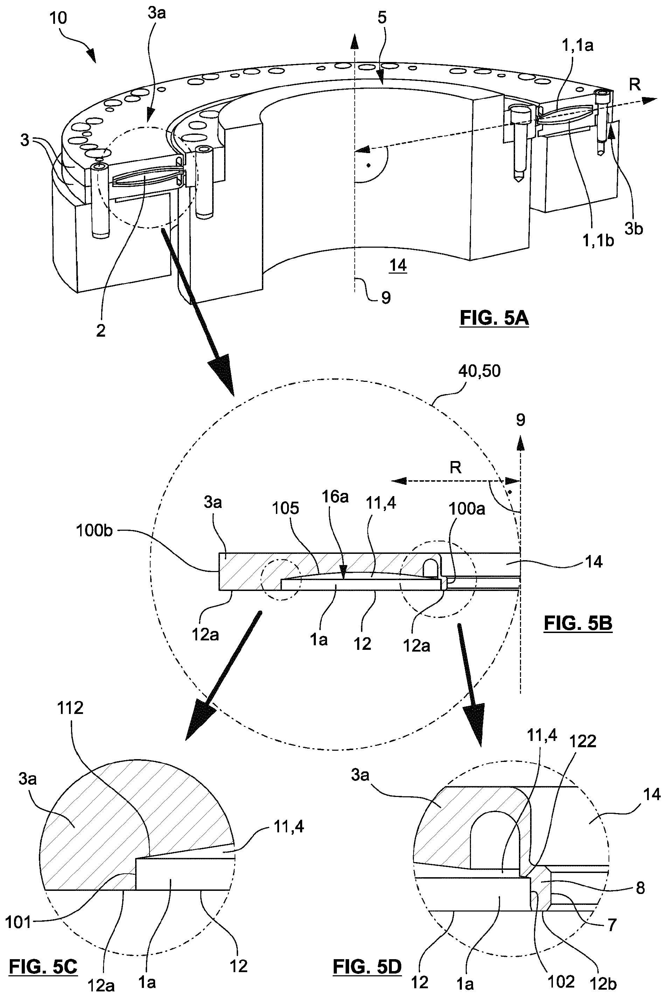

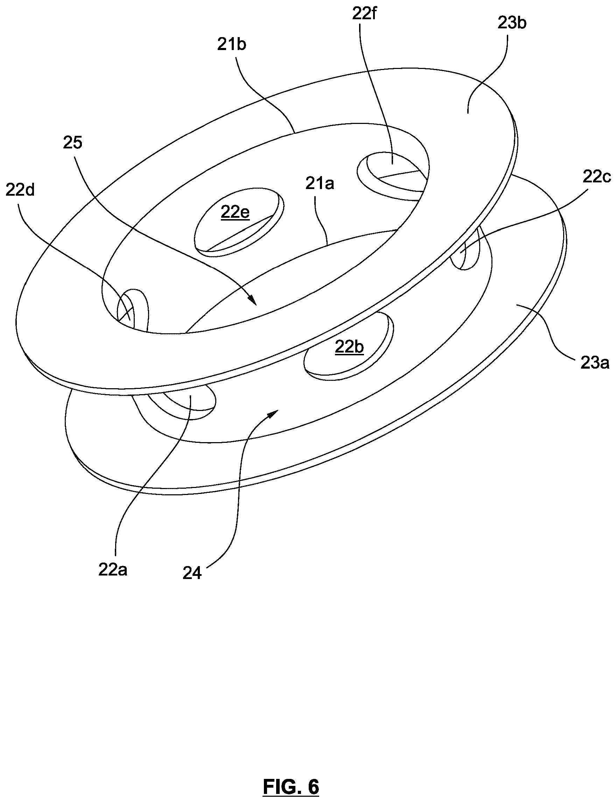

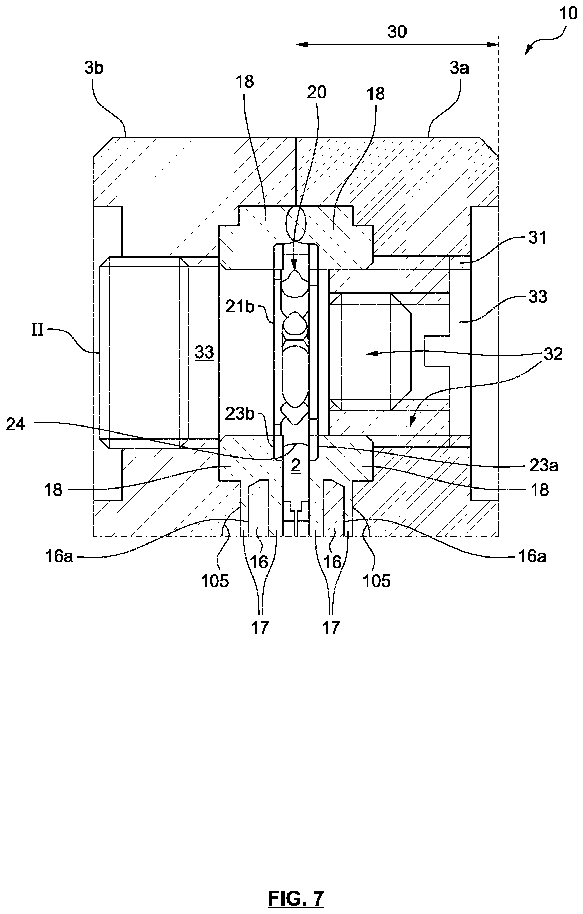

Die erfindungsgemäße Klemmvorrichtung 10, umfasst dabei Folgendes: ein erstes elastische Element 1a und ein zweites elastische Element 1b; ein Gehäuse 3 umfassend ein erstes Gehäuseteil 3a mit einer Innenfläche und ein zweites Gehäuseteil 3b mit einer Innenfläche (vgl. 105 in Fig. 5A), wobei die Gehäuseteile derart zueinander angeordnet und miteinander befestigt sind, dass die Innenflächen der Gehäuseteile 3a, 3b zusammen einen Innenraum innerhalb des Gehäuses 3 abgrenzen; ein oder mehrere Klemmelemente 8, wobei jedes Klemmelement eine Klemmfläche 7 aufweist; eine in dem Innenraum angeordnete Feder 1 umfassend das erste elastische Element 1a und das zweite elastische Element 1a, wobei die Federplatte (vgl. 16 in Fig. 7) des ersten elastischen Elements 1a mit dessen erster Seitenfläche (vgl. 16a in Fig. 5A) zugewandt zu der Innenfläche des ersten Gehäuseteils 3a in dem Innenraum eingeklemmt ist, und wobei die Federplatte des zweiten elastischen Elements 1b mit dessen erster Seitenfläche zugewandt zu der Innenfläche des zweiten Gehäuseteils 3b in dem Innenraum eingeklemmt ist, so dass in dem Innenraum ein Druckraum 2 zwischen den Dichtungsschichten 17 der elastischen Elemente 1a, 1b gebildet wird, wobei der Druckraum 2 entlüftbar ist und belüftbar oder mit Überdruck eines dem Gehäuse zuführbaren Druckmediums beaufschlagbar ist; wobei die Feder 1 ausgelegt ist, dass bei Be- oder Entlüften des Druckraums 2 oder Beaufschlagung des Druckraums 2 mit Überdruck, eine Biegung mindestens einer der Federplatten 16 der elastischen Elemente 1a, 1b veränderbar ist und dadurch die Vorrichtung 10 zwischen einem geöffneten Zustand, in dem ein zu klemmendes Objekt 5 von den ein oder mehreren Klemmflächen 7 beabstandet ist, und einem geschlossenen Zustand, in dem mindestens eine der ein oder mehreren Klemmflächen 7 eine Klemm- und/oder Bremskraft auf das Objekt 5 übertragen, wechselt. Die erfindungsgemäße Vorrichtung 10 umfasst ferner die eingangs erwähnten Mittel des erfindungsgemäßen Käfigs. Diese Mittel werden im Zusammenhang mit den Figuren 6 bis 7 näher erläutert.

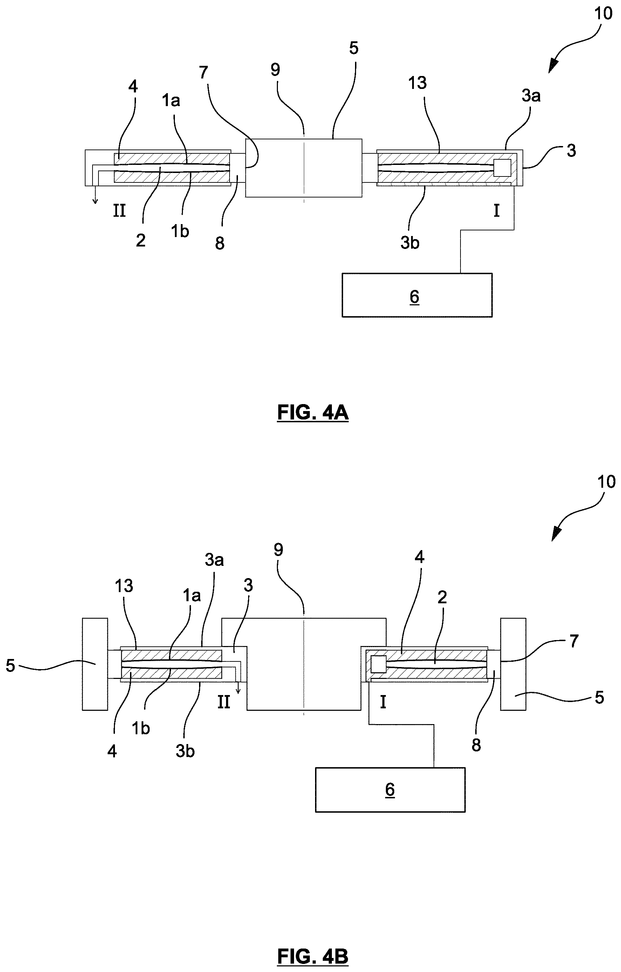

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt. Das Klemmelement 8 wird auch als Klemmlippe bezeichnet. Das Klemmelement 8 kann einstückig mit den Übrigen Teilen des Gehäuseteils 3a, 3b ausgebildet sein oder kann ein von den übrigen Teilen strukturell separiertes Bauteil des Gehäuseteils 3a, 3b sein.

Die Klemmkraft bzw. -wirkung der Klemmfläche 7 auf das zu klemmende Objekt 5 erfolgt in einer Klemmebene, die durch zwei Vektoren aufgespannt wird, die jeweils einen Radius der ringförmigen elastische Elemente 1a, 1b bzw. ringförmigen Aussparung 11 bilden (vgl. Fig. 5A). Die Achse 9 kann durch den Mittelpunkt des Rings der hier als ringförmig beschriebenen Bauteile verlaufen und kann daher als Hauptachse der Klemmvorrichtung 10 bezeichnet werden, die senkrecht zur Klemmebene verlaufen kann. Wenn in diesem Dokument von "innerem" und "äußerem" Bereich, Rand oder Ende gesprochen wird, so sind innerer Rand, innerer Bereich oder inneres Ende näher an der Achse 9 als entsprechend äußerer Rand, äußerer Bereich oder äußeres Ende. Entsprechendes kann, muss aber nicht, auch für andere Bauteile gelten.

Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5A, 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise ausfüllendes Bauteil eingebracht sein, durch das sich die Hauptachse 9 erstreckt.

In Figuren 1A bis 5A ist jeweils die Feder 1 zwischen zwei Anlageflächen (101 und 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines inneren Druckraums 2 der Feder 1 und Belüftung eines äußeren Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft der (leicht) verbogenen Feder 1 aus einer Ausgangsposition, in der das elastische Element entspannt ist, in eine verspannte Position gebracht wird, beispielsweise durch Verbiegen der Federgabel 8, bis im drucklosen Ausgangszustand ein Gleichgewicht zwischen einer Rückstellkraft des elastischen Elements 8 und der Federkraft der Feder 1 entsteht. Bei diesem Gleichgewicht kann die Klemmfläche 7 gegen das Objekt 5 drücken.

Durch zusätzliche Beaufschlagung des äußeren Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im äußeren Druckraum 4 angedeutet. Der äußere Druckraum 4 kann mittels einer Öffnung im Gehäuse 3 mit einem Anschluss I (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der innere Druckraum 2 oder der äußere Druckraum 4 sein kann.

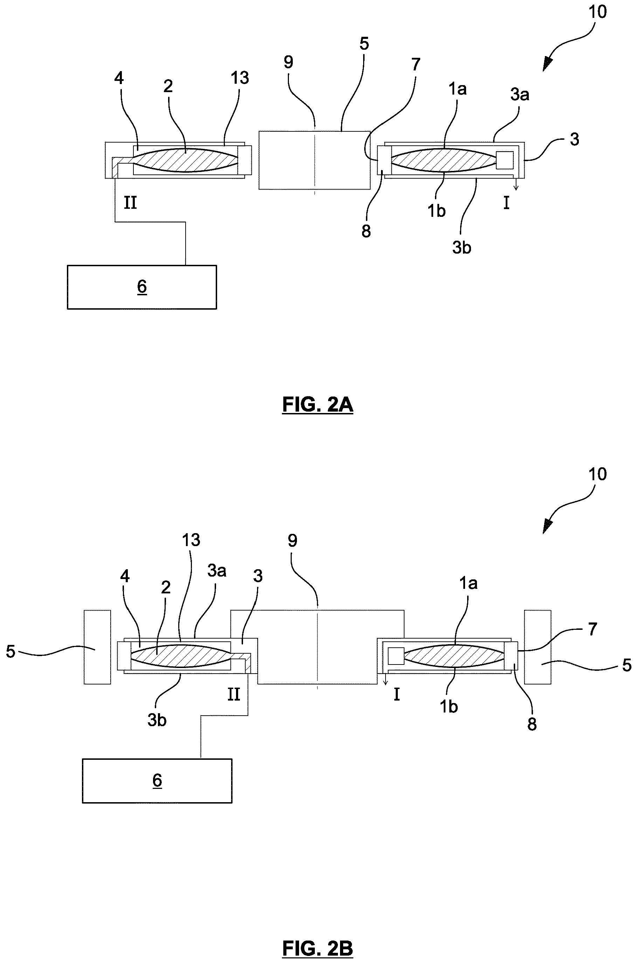

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts 5 beabstandet ist. Der innere Druckraum 2 kann mittels einer Öffnung im Gehäuse 3 mit einem Anschluss II (auch als "Open" bezeichnet) verbunden sein, an dem eine Druckluftpumpe 6 angeschlossen sein kann.

Durch Beaufschlagung des inneren Druckraums 2 durch die Druckluftpumpe 6 mit Druckluft (beispielsweise 4 bar oder 6 bar) und Entlüften des äußeren Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

Durch die Verwendung der Kombination aus elastischer Komponente, hier eine Feder 1 samt elastische Elemente 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 5 näher gezeigt, wobei zwei aufeinanderliegende elastische Elemente 1a, 1b die Feder 1 und den innere Druckraum 2 der Feder 1 zwischen den Platten 1a, 1b bilden. Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die elastischen Elemente 1a, 1b können, zumindest im Bereich von Schlitzen, mit Gummi beschichtet sein, um die für die Druckluft nötige Dichtheit herzustellen. Die elastischen Elemente 1a, 1b sind generell so druckfest und so elastisch biegbar ausgebildet und in dem Gehäuse 3 der Klemmvorrichtung 10 derart angeordnet, dass innerhalb der Feder 1 zwischen den elastischen Elemente 1a, 1b der innere Druckraum 2 gebildet wird und zwischen eines jeden elastischen Elements 1a, 1b und dem Gehäuse 3 bzw. den Gehäuseteilen 3a, 3b der Klemmvorrichtung 10 der äußere Druckraum 4 gebildet wird. Figur 5 zeigt eine dreidimensionale Ansicht einer Klemmvorrichtung 10 ähnlich zu Figuren 1A und 2A.

Durch Belüften oder Beaufschlagen mit Druckluft des äußeren Druckraums 4 und Entlüften des inneren Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des äußeren Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

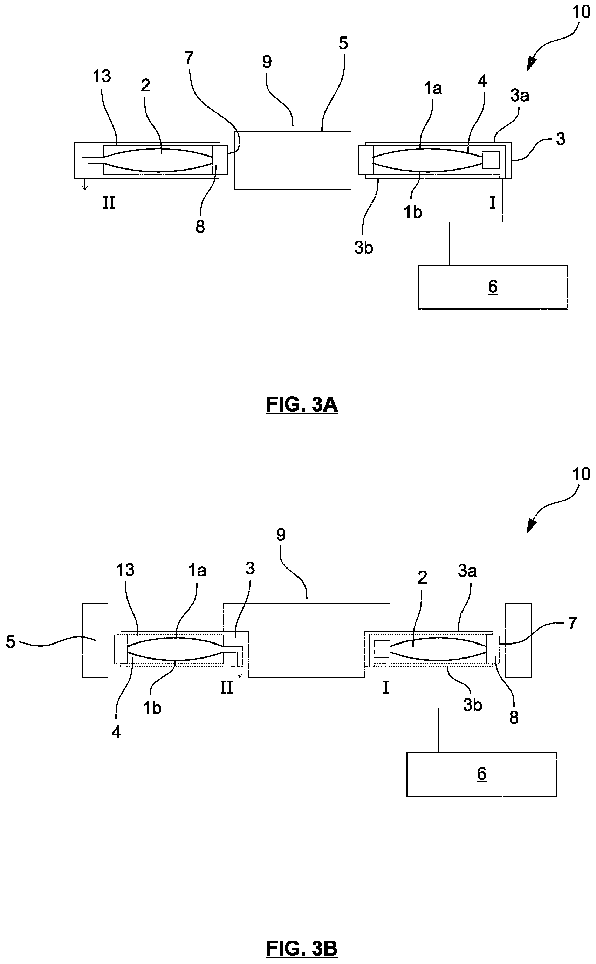

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der elastischen Elemente 1a, 1b angepasst sein oder diese definieren. Eine entsprechende Anschlagsfläche für die elastischen Elemente 1a, 1b kann beispielsweise durch eine Gehäuseinnenwandung gebildet werden. Die Gehäuseinnenwandung kann komplementär (z.B. konkav) zu einer (z.B. konvexen) Verbiegung der elastischen Elemente 1a, 1b ausgebildet sein.

Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des inneren Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der elastischen Elemente 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der elastischen Elemente 1a, 1b im drucklosen Ausgangszustand kann zu einem geöffneten Zustand der Klemmvorrichtung 10 im drucklosen Ausgangszustand führen.

Auch bei plastischer Verformung sind die elastischen Elemente 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den äußeren Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Wie in Figur 5A dargestellt, umfasst das Gehäuse 3 der erfindungsgemäßen Klemmvorrichtungen 10 zwei Gehäuseteile 3a, 3b, die mit Befestigungsmittel, wie etwa Schrauben, miteinander befestigt und so montiert sind, dass im montierten Zustand die beiden Gehäuseteile 3a, 3b den Innenraum 13 zwischen den Gehäuseteilen 3a, 3b innerhalb des Gehäuses 3 definieren in dem die Feder 1 samt deren erfindungsgemäßer ringförmigen elastischen Elemente 1a, 1b angeordnet sind. Die Gehäuseteile 3a, 3b definieren jeweils eine Aussparung 11, die ebenfalls ringförmig ist und die der Aufnahme der ringförmigen elastischen Elemente 1a, 1b dienen, wie in Figuren 5A bis 5D dargestellt. Zumindest ein Teil der ersten Anlagefläche 101 des Gehäuseteils kann (im Wesentlichen) senkrecht zur radialen Richtung R der ringförmigen Aussparung 11 verlaufen und/oder ein Teil der zweiten Anlagefläche 102 des Gehäuseteils kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5A, 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A, 8 verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figur 5B zeigt eine Ausführung der erfindungsgemäßen Komponente 40, 50 (hier mit dem oberen Gehäuseteil 3a aus Fig. 5A), wobei das betreffende Gehäuseteil 3a der Komponente eine ringförmige Aussparung 11 zum Einklemmen des ringförmigen elastischen Elements 1a aufweist, und wobei das Gehäuseteil 3a eine durch die Aussparung 11 definierte Innenfläche (vgl. 105 in Fig. 6) aufweist. Die ringförmige Aussparung 11 definiert vorzugsweise eine ringförmige Öffnung 12 im Gehäuseteil, wobei die ringförmige Öffnung zwischen einem ersten ringförmigen Rand 12a des Gehäuseteils und einem zweiten ringförmigen Rand 12b des Gehäuseteils gebildet ist. Das elastische Element 1a, ist zwischen dem ersten ringförmigen Rand 12a und dem zweiten ringförmigen Rand 12b einklemmbar.

Wenn das elastische Element 1a mit der ersten Seitenfläche (vgl. 16a in Fig. 5B, 7) zugewandt zu der Innenfläche durch die Öffnung 12 in die Aussparung 11 eingeführt und in der Aussparung 11 eingeklemmt wird, wird zwischen der Innenfläche und dem elastischen Element 1a der erste Druckraum 4 gebildet. Das erfindungsgemäße elastische Element hat dabei die eingangs erwähnten Mittel, die eine verlässliche und effektive Abdichtung beim Anschluss II erlauben. Diese Mittel werden im Zusammenhang mit den Figuren 7 bis 8 näher erläutert.

Wie in den Figuren 5C und 5D gezeigt, erstreckt sich das dargestellte elastische Element 1a der Feder 1 von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen dem elastischen Element 1a und ein oder mehreren der Anlageflächen 101, 102 jeweils ein oder mehrere weitere Komponenten befinden, über die das elastische Element 1a seine Federkraft auf die Anlageflächen 101, 102 ausübt.

Wie in Figuren 5B, 5D ersichtlich, wird das elastische Element 1a in der Aussparung 11 zwischen Innenseiten des Gehäuseteils 3a eingeklemmt. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an Innenflächen des Gehäuseteils 3a entlang eingeführt, bis die jeweilige Platte am Ende jeder der beiden Anlageflächen 101, 102 an einen Anschlag 112, 122 stößt und deshalb nicht weiter in die Aussparung 11 eingeführt werden kann. Da die Ausdehnung des elastischen Elements 1a in der Klemmebene bzw. in radialer Richtung der ringförmigen Aussparung größer sein kann als die Ausdehnung des durch das Gehäuseteil definierten Innenraums, kann die Platte 1a im drucklosen Ausgangszustand verbogen bzw. vorgespannt sein.

Figur 6 zeigt eine Ausführung eines Käfigs für ein erfindungsgemäßes Kit.

Wenn, wie die Figuren 1 bis 5 gezeigt, die zwei Gehäuseteile 3a, 3b derart miteinander befestigt werden, dass die darin eingeklemmten elastischen Elemente 1a, 1b aufeinander liegen, um dazwischen den Druckraum 2 zu bilden, ist es hinsichtlich der axialen Fixierung der elastischen Elemente und des Einleitens des Druckmediums in den Druckraum vorteilhaft, wenn der hier dargestellte erfindungsgemäße Käfig 20 zwischen den elastischen Elementen im Bereich des Anschlusses II angeordnet wird. Wie solch eine Anordnung beispielhaft aussehen kann wird in Figur 7 gezeigt

In Figur 6 wird eine bevorzugte Ausgestaltung des Käfigs 20 zur Einleitung eines Druckmediums in einen Druckraum 2 einer pneumatischen Klemm- und/oder Bremsvorrichtung 10 gezeigt, der Käfig 20 umfassend: zwei Grundflächen 23a, 23b; eine sich zwischen den beiden Grundflächen 23a, 23b erstreckende und diese Grundflächen 23a, 23b miteinander verbindende Mantelfläche 24; und einen Innenraum 25, der durch die zwei Grundflächen 23a, 23b und die Mantelfläche 24 zusammen abgegrenzt wird, wobei beide Grundflächen jeweils eine Öffnung 21a, 21b für einen Anschluss II der Klemm- und/oder Bremsvorrichtung 10 zum Einleiten des Druckmediums in den Innenraum 25 aufweisen, und wobei die Mantelfläche 24 mehrere Öffnungen 22a - 22f zum Weiterleiten des Druckmediums aus dem Innenraum 25 in den Druckraum 2 aufweist. Der Käfig ist bevorzugt frei von Befestigungsmitteln (z.B. ein Gewinde das beispielsweise an einem Vorsprung einer der Grundflächen angebracht sein könnte) für ein Befestigen einer Verschlussschraube zum Verschließen einer Anschlussöffnung (in einem Gehäuse der Klemm- und/oder Bremsvorrichtung) für den Anschluss.

Der Käfig hat eine zylindrische oder kreiszylindrische Form. Beide Grundflächen 23a, 23b sind über die Mantelfläche 24 auskragend.

Die zwei Grundflächen 23a, 23b können (im Wesentlichen) parallel zueinander verlaufen. Die Mantelfläche 24 schneidet die zwei Grundflächen 23a, 23b und kann (im Wesentlichen) senkrecht zu den Grundflächen 23a, 23b verlaufen.

Figur 7 zeigt ein Ausschnitt eines Querschnitts einer erfindungsgemäßen Klemm- und/oder Bremsvorrichtung 10 mit dem erfindungsgemäßen Käfig 20 aus Figur 6. In Figur 7 ist auch eine eingebaute Variante des erfindungsgemäßen Kits 30 dargestellt.

Das Kit 30 umfasst: den erfindungsgemäßen Käfig 20 aus Figur 6; eine Verschlussschraube 32; ein Gehäuseteil 3a, umfassend: eine Anschlussöffnung 33; und ein an dem Gehäuseteil 3a im Bereich der Anschlussöffnung 33 angeordnetes Gewinde 3 für das Eindrehen der Verschlussschraube 32 zum Verschließen der Anschlussöffnung 33. Das Gewinde 31 für die Verschlussschraube32 ist von dem Käfig 20 getrennt, so dass ein Eindrehen der Verschlussschraube 32 in das Gewinde 31 den Käfig und die Dichtungsschicht 17 auf der Federplatte 16 in dem Gehäuseteil 3a (z.B. mittels Rotation) nicht beschädigen kann. Die Dichtungsschicht 17 weist eine Anschlussdichtung 18 auf, die ausgelegt ist, eine der Grundflächen 23a des Käfigs 20 gegen das Gehäuseteil 3a und/oder die Verschlussschraube 32 abzudichten.

Die Vorrichtung 10 umfasst ein weiteres Gehäuseteil 3b mit einer Anschlussöffnung 33 für den Anschluss II zum Beaufschlagen des Druckraumes 2 mit dem Druckmedium; und ein weiteres elastisches Element 1b samt federplatte 16 und Dichtungsschicht 17 zum Abdichten des weiteren Gehäuseteils 3b. Die Gehäuseteile 3a, 3b bilden zusammen ein Gehäuse 3 und sind derart zueinander angeordnet und miteinander befestigt, dass Innenflächen 150 der Gehäuseteile 3a, 3b zusammen einen Gehäuseinnenraum innerhalb des Gehäuses 3 abgrenzen.

Eine in dem Gehäuseinnenraum angeordnete Feder umfassend die elastischen Elemente ist vorgesehen, wobei innerhalb des Gehäuseinnenraums jedes der elastischen Elemente derart in einem anderen der Gehäuseteilen 3a, 3b eingeklemmt ist, dass in dem Gehäuseinnenraum der Druckraum 2 zwischen den eingeklemmten elastischen Elementen gebildet wird, wobei der Käfig 20 derart zwischen den eingeklemmten elastischen Elementen angeordnet ist, dass sich die Mantelfläche 24 des Käfigs 20 von einem der elastischen Elemente zu dem anderen der elastischen Elemente erstreckt und der Druckraum 2 über die Öffnungen 22a-f in der Mantelfläche 24, die Öffnung 21a-b zumindest einer der Grundflächen 23a-b und die Anschlussöffnung 33 des weiteren Gehäuseteils 3b entlüftbar ist und belüftbar oder mit Überdruck eines Druckmediums beaufschlagbar ist.

Die Feder ist ausgelegt, dass bei Be- oder Entlüften des Druckraums 2 oder Beaufschlagung des Druckraums 2 mit Überdruck über den Anschluss II, eine Biegung mindestens einer der elastischen Elemente veränderbar ist und dadurch die Vorrichtung 10 zwischen einem geöffneten Zustand, in dem ein zu klemmendes Objekt von den ein oder mehreren Klemmflächen beabstandet ist, und einem geschlossenen Zustand, in dem mindestens eine der ein oder mehreren Klemmflächen eine Klemm- und/oder Bremskraft auf das Objekt übertragen, wechselt.

Jedes der elastischen Elemente hat eine Dichtungsschicht 17 mit einer Anschlusssichtung 18 und der Käfig 20 ist derart zwischen den Anschlussdichtungen 18 der eingeklemmten elastischen Elemente angeordnet, dass die Anschlussdichtungen 18 die, vorzugsweise auskragenden Bereiche der Grundflächen 23a, 23b des Käfigs 20 gegen die Gehäuseteile 3a, 3b abdichten.

Durch die hier beschriebenen Mitteln einzeln und in Kombination kann die verbesserte Einleitung des Druckmediums von Anschluss II über die Anschlussöffnung 33, den Innenraum 25 des Käfigs 20 in den Druckraum 2 eingeleitet werden, bei axialer Fixierung bzw. Stabilisierung der elastischen Elemente. Dies ermöglicht einen sicheren Betrieb der Klemm- und/oder Bremsvorrichtung 10 ohne die Dynamik der Vorrichtung negativ zu beeinträchtigen. Zudem ermöglicht der erfindungsgemäße Käfig mit zwei Grundflächen die jeweils eine Öffnung aufweisen in der Vorrichtung 10 wie in Figur 7 dargestellt, dass sowohl über die Anschlussöffnung 33 des Gehäuseteils 3b als auch über die Anschlussöffnung 33 des Gehäuseteils 3a der Druckraum 2 mit dem Druckmedium über den Käfig 20 verlässlich beaufschlagt werden kann. Es muss lediglich diejenige Anschlussöffnung 33, die nicht für das Beaufschlagen bzw. für Anschluss II gewählt werden soll (in Fig. 7 Öffnung 33 in Gehäuseteil 3a), mit der Verschlussschraube 32 verschlossen werden, während diejenige Anschlussöffnung 33, die für den Anschluss II bzw. das Beaufschlagen verwendet werden soll (in Fig. 7 Öffnung 33 in Gehäuseteil 3b), frei von der Verschlussschraube sein. Beim Zu- oder Aufschrauben der Verschlussschraube 32, beispielsweise um die Anschlussseite zu wechseln, wird die Anschlussdichtung 18 nicht mitgedreht, da das Gewinde 31 getrennt von der Anschlussdichtung 18 angeordnet ist und auch getrennt von Käfig 20 angeordnet ist. Dadurch werden Beschädigungen an den Anschlussdichtungen 18 verhindert.

## Patentansprüche

1. Ein Kit (30) für eine Klemm- und/oder Bremsvorrichtung (10), das Kit (30) umfassend:
einen Käfig (20) zur Einleitung eines Druckmediums in einen Druckraum (2) der pneumatischen Klemm- und/oder Bremsvorrichtung (10), der Käfig (20) umfassend:
zwei Grundflächen (23a, 23b);
eine sich zwischen den beiden Grundflächen (23a, 23b) erstreckende und diese Grundflächen (23a, 23b) miteinander verbindende Mantelfläche (24); und
einen Innenraum (25), der durch die zwei Grundflächen (23a, 23b) und die Mantelfläche (24) zusammen abgegrenzt wird,
wobei ein oder mehrere der Grundflächen eine Öffnung (21a, 21b) für einen Anschluss (II) der Klemm- und/oder Bremsvorrichtung (10) zum Einleiten des Druckmediums in den Innenraum (25) aufweist, und
wobei die Mantelfläche (24) ein oder mehrere Öffnungen (22a - 22f) zum Weiterleiten des Druckmediums aus dem Innenraum (25) in den Druckraum (2) aufweist;
**dadurch gekennzeichnet, dass** das Kit (30) ferner umfasst:
eine Verschlussschraube (32);
ein Gehäuseteil (3a, 3b), umfassend:
eine Anschlussöffnung (33) für den Anschluss (II); und
ein an dem Gehäuseteil (3a, 3b) im Bereich der Anschlussöffnung (33) angeordnetes Gewinde (31) für das Eindrehen der Verschlussschraube (32) zum Verschließen der Anschlussöffnung (33).

2. Das Kit nach Anspruch 1, wobei der Käfig (20) frei ist von Befestigungsmitteln (31) für ein Befestigen der Verschlussschraube (32) zum Verschließen der Anschlussöffnung (33).

3. Das Kit nach Anspruch 1 oder 2, wobei jede der Grundflächen eine Öffnung für einen Anschluss (II) der Klemm- und/oder Bremsvorrichtung (10) zum Einleiten des Druckmediums in den Innenraum (25) aufweist.

4. Das Kit nach irgendeinem der vorangehenden Ansprüche 1-3, wobei eine oder mehrere der Grundflächen (23a, 23b) über die Mantelfläche (24) auskragen.

5. Das Kit nach irgendeinem der vorangehenden Ansprüche 1-4, wobei die ein oder mehreren Öffnungen (22a - 22f) in der Mantelfläche (24) eine Vielzahl von Öffnungen (22a - 22f) in der Mantelfläche (24) sind, die zumindest teilweise an verschiedenen, vorzugsweise aneinandergrenzenden oder sich gegenüberliegenden, Abschnitten der Mantelfläche (24) angeordnet sind.

6. Das Kit nach irgendeinem der vorangehenden Ansprüche 2-5, wobei die Befestigungsmittel ein Gewinde (31) für das Eindrehen der Verschlussschraube (32) umfasst.

7. Das Kit nach irgendeinem der vorangehenden Ansprüche, wobei das Gewinde für die Verschlussschraube (32) durch eine Innenfläche des Gehäuseteils (3a, 3b) definiert wird,
oder
wobei das Gewinde (31) für die Verschlussschraube (32) durch ein an dem Gehäuseteil (3a, 3b) befestigtes Kopplungselement definiert wird, das ausgelegt ist, das Gehäuseteil (3a, 3b) mit der Verschlussschraube (32) zu koppeln.

8. Das Kit nach irgendeinem der vorangehenden Ansprüche, wobei das Gewinde (31) für die Verschlussschraube (32) und/oder das Kopplungselement von dem Käfig (20) getrennt ist bzw. sind.

9. Das Kit nach irgendeinem der vorangehenden Ansprüche, ferner umfassend ein elastisches Element (1a, 1b), welches ausgelegt ist, zum Abdichten des Gehäuseteils (3a, 3b) zwischen dem Käfig (20) und der in das Gewinde (31) eingedrehte Verschlussschraube (32) angeordnet zu werden.

10. Das Kit nach Anspruch 9, wobei das elastische Element (1A, 1B) eine Federplatte (16) und eine auf der Federplatte (16) befestigte Dichtungsschicht (17) umfasst, wobei die Dichtungsschicht (17) eine Anschlussdichtung (18) aufweist, die ausgelegt ist, eine der Grundflächen (23a, 23b) des Käfigs (20) gegen das Gehäuseteil (3a, 3b) und/oder die Verschlussschraube (32) abzudichten.

11. Eine Klemm- und/oder Bremsvorrichtung (10) zum Klemmen und/oder Bremsen eines zu klemmenden und/oder bremsenden Objekts, umfassend:
ein Kit (20) nach Anspruch 9 oder 10, bei dem dessen Anschlussöffnung (33) durch Eindrehen der Verschlussschraube (32) in das Gewinde (31) verschlossen ist und bei dem dessen elastisches Element (1a, 1b) zum Abdichten des Gehäuseteils (3a, 3b) zwischen dem Käfig (20) und der Verschlussschraube (32) angeordnet ist;
ein weiteres Gehäuseteil (3b) mit einer Anschlussöffnung (33) für den Anschluss (II) der Klemm- und/oder Bremsvorrichtung (10) zum Beaufschlagen des Druckraumes (2) mit dem Druckmedium; und
ein weiteres elastisches Element (1b) zum Abdichten des weiteren Gehäuseteils (3b);
wobei die Gehäuseteile (3a, 3b) zusammen ein Gehäuse (3) bilden und derart zueinander angeordnet und miteinander befestigt sind, dass Innenflächen (105) der Gehäuseteile (3a, 3b) zusammen einen Gehäuseinnenraum innerhalb des Gehäuses (3) abgrenzen;
ein oder mehrere Klemmelemente (8), wobei jedes Klemmelement eine Klemmfläche (7) aufweist;
eine in dem Gehäuseinnenraum angeordnete Feder (1) umfassend die elastischen Elemente (1a, 1b), wobei innerhalb des Gehäuseinnenraums jedes der elastischen Elemente (1a, 1b) derart in einem anderen der Gehäuseteilen (3a, 3b) eingeklemmt ist, dass in dem Gehäuseinnenraum der Druckraum (2) zwischen den eingeklemmten elastischen Elementen (1a, 1b) gebildet wird,
wobei der Käfig derart zwischen den eingeklemmten elastischen Elementen (1a, 1b) angeordnet ist, dass sich die Mantelfläche (24) des Käfigs (20) von einem der elastischen Elemente (1a, 1b) zu dem anderen der elastischen Elemente (1b) erstreckt und der Druckraum (2) über die Öffnungen (22a-f) in der Mantelfläche (24), die Öffnung (21a-b) zumindest einer der Grundflächen (23a-b) und die Anschlussöffnung (33) des weiteren Gehäuseteils entlüftbar ist und belüftbar oder mit Überdruck eines Druckmediums beaufschlagbar ist,
wobei die Feder (1) ausgelegt ist, dass bei Be- oder Entlüften des Druckraums (2) oder Beaufschlagung des Druckraums (2) mit Überdruck, eine Biegung mindestens einer der elastischen Elemente (1a, 1b) veränderbar ist und dadurch die Vorrichtung (10) zwischen einem geöffneten Zustand, in dem ein zu klemmendes Objekt (5) von den ein oder mehreren Klemmflächen (7) beabstandet ist, und einem geschlossenen Zustand, in dem mindestens eine der ein oder mehreren Klemmflächen (7) eine Klemm- und/oder Bremskraft auf das Objekt (5) übertragen, wechselt.

12. Die Klemm- und/oder Bremsvorrichtung (10) nach Anspruch 11, wobei jedes der elastischen Elemente (1a, 1b) eine Dichtungsschicht (17) mit einer Anschlusssichtung (18) aufweist und der Käfig (20) derart zwischen den Anschlussdichtungen (18) der eingeklemmten elastischen Elemente (1a, 1b) angeordnet ist, dass die Anschlussdichtungen (18) die, vorzugsweise auskragenden Bereiche der Grundflächen (23a, 23b) des Käfigs (20) gegen die Gehäuseteile (3a, 3b) abdichten.

13. Die Klemm- und/oder Bremsvorrichtung (10) nach Anspruch 11, wobei die Vorrichtung (10) derart ausgelegt ist, dass durch das Belüften des Druckraums (2), oder durch das Beaufschlagen des Druckraums (2) mit Überdruck, durch den Käfig (20), sich eines der Klemmelemente (8) auf einen Abschnitt einer der Innenflächen (105) zubewegt und/oder sich die Biegung mindestens einer der Federplatten (16) der elastischen Elemente vergrößert, und dadurch die Vorrichtung (10) von dem geschlossenen Zustand in den geöffneten Zustand wechselt.

14. Die Klemm- und/oder Bremsvorrichtung (10) nach Anspruch 11, wobei die Klemm- und/oder Bremskraft bewirkt wird dadurch, dass sich der innere oder äußere Rand zumindest einer der Federplatten (16) der elastischen Elemente (1a, 1b) an einer der Innenflächen (105) der Gehäuseteile (3a, 3b) abstützt und der äußere oder innere Rand der zumindest einen Federplatte (16) auf das Klemmelement drückt.

15. Die Klemm- und/oder Bremsvorrichtung (10) nach Anspruch 11,
wobei der Gehäuseinnenraum einen weiteren Druckraum (4) zwischen den elastischen Elementen (1a, 1b) und den Innenflächen (105) der Gehäuseteile (3a, 3b) umfasst, wobei eine Federplatte (16) zumindest eines der elastischen Elemente (1a, 1b) ausgelegt ist, durch das Beaufschlagen des weiteren Druckraums (4) mit Überdruck, ihre Biegung zu reduzieren um, bei Aufstützen des inneren oder äußeren Rands der Federplatte (16) an der Innenfläche (105) des betreffenden Gehäuseteils, mit dem äußeren oder inneren Rand der Federplatte (16) auf eines der Klemmelemente derart zu drücken, dass dadurch eine Übertragung der Klemm- und/oder Bremskraft von der Klemmfläche des Klemmelements auf das zu klemmende und/oder bremsende Objekt (5) bewirkt wird und die Vorrichtung (10) von dem geöffneten Zustand in den geschlossenen Zustand wechselt
und/oder
wobei die Vorrichtung (10) derart ausgelegt ist, dass durch das Belüften des weiteren Druckraums (4) oder durch das Beaufschlagen des weiteren Druckraums (4) mit Überdruck, sich eines der Klemmelemente von einem Abschnitt einer der Innenflächen (105) entfernt und/oder sich die Biegung mindestens einer der Federplatten (16) der elastischen Elemente verringert, und dadurch die Vorrichtung (10) von dem geöffneten Zustand in den geschlossenen Zustand wechselt.

## Claims

1. A kit (30) for a clamping and/or braking device (10), the kit (30) comprising:
a cage (20) for introducing a pressure medium into a pressure chamber (2) of a pneumatic clamping and/or braking device (10), the cage (20) comprising:
two base surfaces (23a, 23b);
a lateral surface (24) extending between the two base surfaces (23a, 23b) and connecting these base surfaces (23a, 23b) to one another; and
an interior space (25) which is delimited by the two base surfaces (23a, 23b) and the lateral surface (24) together,
wherein one or more of the base surfaces has an opening (21a, 21b) for a connection (II) of the clamping and/or braking device (10) for introducing the pressure medium into the interior space (25), and
wherein the lateral surface (24) has one or more openings (22a - 22f) for passing on the pressure medium from the interior space (25) into the pressure chamber (2);
**characterized in that** the kit (30) further comprises:
a closure screw (32);
a housing part (3a, 3b) comprising:
a connection opening (33) for the connection (II); and
a thread (31) arranged on the housing part (3a, 3b) in the region of the connection opening (33) for screwing in the closure screw (32) for closing the connection opening (33).

2. The kit according to claim 1, wherein the cage (20) is free of fastening means (31) for fastening the closure screw (32) for closing the connection opening (33).

3. The kit of claim 1 or 2, wherein each of the base surfaces has an opening for a connection (II) of the clamping and/or braking device (10) for introducing the pressure medium into the interior space (25).

4. The kit according to any one of the preceding claims 1-3, wherein one or more of the base surfaces (23a, 23b) projects beyond the lateral surface (24).

5. The kit according to any one of the preceding claims 1-4, wherein the one or more openings (22a - 22f) in the lateral surface (24) are a plurality of openings (22a - 22f) in the lateral surface (24) which are arranged at least partially at different, preferably adjacent or opposite, portions of the lateral surface (24).

6. The kit according to any one of the preceding claims 1-5, wherein the fastening means comprise a thread (31) for screwing in the closure screw (32).

7. The kit (30) according to any one of the preceding claims, wherein the thread for the closure screw (32) is defined by an inner surface of the housing part (3a, 3b),
or
wherein the thread (31) for the closure screw (32) is defined by a coupling element fastened to the housing part (3a, 3b), which is configured to couple the housing part (3a, 3b) to the closure screw (32).

8. The kit according to any one of the preceding claims, wherein the thread (31) for the closure screw (32) and/or the coupling element is/are separate from the cage (20).

9. The kit according to any one of the preceding claims, further comprising an elastic element (1a, 1b) which is configured to be arranged between the cage (20) and the closure screw (32)screwed in the thread (31), for sealing the housing part (3a, 3b).

10. The kit according to claim 9, wherein the elastic element (1a, 1b) comprises a spring plate (16) and a sealing layer (17) fastened on the spring plate (16), wherein the sealing layer (17) has a connection seal (18) which is configured to seal one of the base surfaces (23a, 23b) of the cage (20) against the housing part (3a, 3b) and/or the closure screw (32).

11. A clamping and/or braking device (10) for clamping and/or braking an object to be clamped and/or braked, comprising:
a kit (20) according to claim 9 or 10, in which the connection opening (33) thereof is closed by screwing the closure screw (32) into the thread (31) and in which the elastic element (1a, 1b) thereof is arranged between the cage (20) and the closure screw (32) for sealing the housing part (3a, 3b);
a further housing part (3b) with a connection opening (33) for the connection (II) of the clamping and/or braking device (10) for applying the pressure medium to the pressure chamber (2); and
a further elastic element (1b) for sealing the further housing part (3b);
wherein the housing parts (3a, 3b) together form a housing (3) and are arranged with respect to one another and fastened to one another in such a way that inner surfaces (105) of the housing parts (3a, 3b) together delimit a housing interior space within the housing (3);
one or more clamping elements (8), wherein each clamping element has a clamping surface (7);
a spring (1) arranged in the housing interior space and comprising the elastic elements (1a, 1b), wherein, within the housing interior space, each of the elastic elements (1a, 1b) is clamped in another of the housing parts (3a, 3b) in such a way that the pressure chamber (2) is formed in the housing interior space between the clamped elastic elements (1a, 1b),
wherein the cage is arranged between the clamped elastic elements (1a, 1b) in such a way that the lateral surface (24) of the cage (20) extends from one of the elastic elements (1a, 1b) to the other of the elastic elements (1b) and the pressure chamber (2) can be vented via the openings (22a-f) in the lateral surface (24), the opening (21a-b) of at least one of the base surfaces (23a-b) and the connection opening (33) of the further housing part and is aeratable or can be subjected to overpressure of a pressure medium,
wherein the spring (1) is designed in such a way that, when the pressure chamber (2) is aerated or vented or the pressure chamber (2) is subjected to overpressure, a bending of at least one of the elastic elements (1a, 1b) is changeable and as a result the device (10) changes between an open state, in which an object (5) to be clamped is spaced apart from the one or more clamping surfaces (7), and a closed state, in which at least one of the one or more clamping surfaces (7) transmits a clamping and/or braking force to the object (5).

12. The clamping and/or braking device (10) according to claim 11, wherein each of the elastic elements (1a, 1b) has a sealing layer (17) with a connection seal (18) and the cage (20) is arranged between the connection seals (18) of the clamped elastic elements (1a, 1b) in such a way that the connection seals (18) seal the, preferably projecting, regions of the base surfaces (23a, 23b) of the cage (20) against the housing parts (3a, 3b).

13. The clamping and/or braking device (10) according to claim 11, wherein the device (10) is designed in such a way that, as a result of aerating the pressure chamber (2) or subjecting the pressure chamber (2) to overpressure through the cage (20), one of the clamping elements (8) moves towards a portion of one of the inner surfaces (105) and/or the bending of at least one of the spring plates (16) of the elastic elements increases, and as a result the device (10) changes from the closed state into the open state.

14. The clamping and/or braking device (10) according to claim 11, wherein the clamping and/or braking force is caused by the inner or outer edge of at least one of the spring plates (16) of the elastic elements (1a, 1b) being supported on one of the inner surfaces (105) of the housing parts (3a, 3b) and the outer or inner edge of the at least one spring plate (16) pressing against the clamping element.

15. The clamping and/or braking device (10) according to claim 11, wherein the housing interior space comprises a further pressure chamber (4) between the elastic elements (1a, 1b) and the inner surfaces (105) of the housing parts (3a, 3b),
wherein a spring plate (16) of at least one of the elastic elements (1a, 1b) is designed, as a result of subjecting the further pressure chamber (4) to overpressure, to reduce its bending in order, when the inner or outer edge of the spring plate (16) is supported on the inner surface (105) of the respective housing part, to press with the outer or inner edge of the spring plate (16) against one of the clamping elements in such a way that as a result a transmission of the clamping and/or braking force from the clamping surface of the clamping element to the object (5) to be clamped and/or braked is caused and the device (10) changes from the open state into the closed state
and/or
wherein the device (10) is designed in such a way that, as a result of aerating the further pressure chamber (4) or subjecting the further pressure chamber (4) to overpressure, one of the clamping elements moves away from a portion of one of the inner surfaces (105) and/or the bending of at least one of the spring plates (16) of the elastic elements decreases, and as a result the device (10) changes from the open state into the closed state.

## Revendications

1. Kit (30) pour un dispositif de serrage et/ou de freinage (10), le kit (30) comprenant:
une cage (20) pour l'introduction d'un fluide sous pression dans une espace de pression (2) du dispositif de serrage et/ou de freinage pneumatique (10), la cage (20) comprenant:
deux surfaces de base (23a, 23b);
une surface d'enveloppe (24) s'étendant entre les deux surfaces de base (23a, 23b) et reliant ces surfaces de base (23a, 23b) l'une à l'autre; et
une espace intérieur (25) qui est délimité conjointement par les deux surfaces de base (23a, 23b) et la surface d'enveloppe (24),
une ou plusieurs des surfaces de base présentent une ouverture (21a, 21b) pour un raccord (II) du dispositif de serrage et/ou de freinage (10) pour l'introduction du fluide sous pression dans l'espace intérieur (25), et
la surface d'enveloppe (24) présente une ou plusieurs ouvertures (22a - 22f) pour le transfert du fluide sous pression de l'espace intérieur (25) dans l'espace de pression (2);
**caractérisé en ce que** le kit (30) comprend en outre:
une vis de fermeture (32);
un élément de boîtier (3a, 3b), comprenant:
une ouverture de raccordement (33) pour le raccord (II); et
un filetage (31) disposé sur l'élément de boîtier (3a, 3b) dans la zone de l'ouverture de raccordement (33) pour le vissage de la vis de fermeture (32) pour la fermeture de l'ouverture de raccordement (33).

2. Kit selon la revendication 1, dans lequel la cage (20) est exempte de moyens de fixation (31) pour une fixation de la vis de fermeture (32) pour la fermeture de la ouverture de raccordement (33).

3. Kit selon la revendication 1 ou 2, dans lequel chacune des surfaces de base présente une ouverture pour un raccord (II) du dispositif de serrage et/ou de freinage (10) pour l'introduction du fluide sous pression dans l'espace intérieur (25).

4. Kit selon l'une quelconque des revendications précédentes 1 à 3, dans lequel une ou plusieurs des surfaces de base (23a, 23b) font saillie au-delà de la surface d'enveloppe (24).

5. Kit selon l'une quelconque des revendications précédentes 1 à 4, dans lequel les une ou plusieurs ouvertures (22a - 22f) dans la surface d'enveloppe (24) sont une pluralité d'ouvertures (22a - 22f) dans la surface d'enveloppe (24), qui sont disposées au moins en partie sur différentes sections, de préférence adjacentes ou opposées, de la surface d'enveloppe (24).

6. Kit selon l'une quelconque des revendications précédentes 2 à 5, dans lequel les moyens de fixation comprend un filetage (31) pour le vissage de la vis de fermeture (32).

7. Kit selon l'une quelconque des revendications précédentes, dans lequel le filetage pour la vis de fermeture (32) est défini par une surface intérieure de l'élément de boîtier (3a, 3b),
ou
dans lequel le filetage (31) pour la vis de fermeture (32) est défini par un élément de couplage fixé à l'élément de boîtier (3a, 3b), qui est conçu pour coupler l'élément de boîtier (3a, 3b) à la vis de fermeture (32).

8. Kit selon l'une quelconque des revendications précédentes, dans lequel le filetage (31) pour la vis de fermeture (32) et/ou l'élément de couplage est/sont séparés de la cage (20).

9. Kit selon l'une quelconque des revendications précédentes, comprenant en outre un élément élastique (1a, 1b), qui est conçu pour être disposé entre la cage (20) et la vis de fermeture (32) vissée dans le filetage (31) pour l'étanchéité de l'élément de boîtier (3a, 3b).

10. Kit selon la revendication 9, dans lequel l'élément élastique (1a, 1b) comprend une plaque de ressort (16) et une couche d'étanchéité (17) fixée sur la plaque de ressort (16), la couche d'étanchéité (17) présente un joint d'étanchéité de raccordement (18), qui est conçu pour étanchéifier l'une des surfaces de base (23a, 23b) de la cage (20) contre l'élément de boîtier (3a, 3b) et/ou la vis de fermeture (32).

11. Dispositif de serrage et/ou de freinage (10) pour serrer et/ou freiner un objet à serrer et/ou à freiner, comprenant:
un kit (20) selon la revendication 9 ou 10, dans lequel son ouverture de raccordement (33) est fermée par vissage de la vis de fermeture (32) dans le filetage (31) et dans lequel son élément élastique (1a, 1b) est disposé entre la cage (20) et la vis de fermeture (32) pour l'étanchéité de l'élément de boîtier (3a, 3b);
un autre élément de boîtier (3b) avec une ouverture de raccordement (33) pour le raccord (II) du dispositif de serrage et/ou de freinage (10) pour l'alimentation du espace de pression (2) avec le fluide sous pression; et
un autre élément élastique (1b) pour l'étanchéité de l'autre élément de boîtier (3b);
les éléments de boîtier (3a, 3b) forment ensemble un boîtier (3) et sont disposés l'un par rapport à l'autre et fixés l'un à l'autre de telle sorte que des surfaces intérieures (105) des éléments de boîtier (3a, 3b) délimitent ensemble un espace intérieur de boîtier à l'intérieur du boîtier (3);
un ou plusieurs éléments de serrage (8), chaque élément de serrage présentant une surface de serrage (7);
un ressort (1) disposé dans l'espace intérieur de boîtier, comprenant les éléments élastiques (1a, 1b), chacun des éléments élastiques (1a, 1b) étant serré à l'intérieur de l'espace intérieur de boîtier dans un autre des éléments de boîtier (3a, 3b) de telle sorte que l'espace de pression (2) est formée dans l'espace intérieur de boîtier entre les éléments élastiques serrés (1a, 1b),
la cage étant disposée entre les éléments élastiques serrés (1a, 1b) de telle sorte que la surface d'enveloppe (24) de la cage (20) s'étende de l'un des éléments élastiques (1a, 1b) à l'autre des éléments élastiques (1b) et l'espace de pression (2) peut être ventilée par le biais des ouvertures (22a-f) dans la surface d'enveloppe (24), de l'ouverture (21a-b) d'au moins une des surfaces de base (23a-b) et de l'ouverture de raccordement (33) de l'autre élément de boîtier et peut être aérée ou peut être alimentée avec une surpression d'un fluide sous pression,
le ressort (1) étant conçu de telle sorte que lors de la ventilation ou de la ventilation de l'espace de pression (2) ou de l'alimentation de l'espace de pression (2) avec une surpression, une flexion d'au moins un des éléments élastiques (1a, 1b) peut être modifiée et le dispositif (10) change ainsi entre un état ouvert, dans lequel un objet à serrer (5) est espacé de la ou des surfaces de serrage (7), et un état fermé, dans lequel au moins une de la ou des surfaces de serrage (7) transmet une force de serrage et/ou de freinage à l'objet (5).

12. Dispositif de serrage et/ou de freinage (10) selon la revendication 11, dans lequel chacun des éléments élastiques (1a, 1b) présente une couche d'étanchéité (17) avec un joint d'étanchéité de raccordement (18) et la cage (20) est disposée entre les joints d'étanchéité de raccordement (18) des éléments élastiques serrés (1a, 1b) de telle sorte que les joints d'étanchéité de raccordement (18) étanchéifient les zones de préférence en saillie des surfaces de base (23a, 23b) de la cage (20) contre les éléments de boîtier (3a, 3b).

13. Dispositif de serrage et/ou de freinage (10) selon la revendication 11, dans lequel le dispositif (10) est conçu de telle sorte que par la ventilation du espace de pression (2), ou par l'alimentation du espace de pression (2) avec une surpression, par la cage (20), un des éléments de serrage (8) se déplace vers une section d'une des surfaces intérieures (105) et/ou la flexion d'au moins une des plaques de ressort (16) des éléments élastiques augmente, et le dispositif (10) change ainsi de l'état fermé à l'état ouvert.

14. Dispositif de serrage et/ou de freinage (10) selon la revendication 11, dans lequel la force de serrage et/ou de freinage est provoquée par le fait que le bord intérieur ou extérieur d'au moins une des plaques de ressort (16) des éléments élastiques (1a, 1b) s'appuie sur une des surfaces intérieures (105) des éléments de boîtier (3a, 3b) et le bord extérieur ou intérieur de l'au moins une plaque de ressort (16) appuie sur l'élément de serrage.

15. Dispositif de serrage et/ou de freinage (10) selon la revendication 11, dans lequel l'espace intérieur de boîtier comprend un espace de pression supplémentaire (4) entre les éléments élastiques (1a, 1b) et les surfaces intérieures (105) des éléments de boîtier (3a, 3b), dans lequel une plaque de ressort (16) d'au moins un des éléments élastiques (1a, 1b) est conçue pour, par l'alimentation du espace de pression supplémentaire (4) avec une surpression, réduire sa flexion pour, lors de l'appui du bord intérieur ou extérieur de la plaque de ressort (16) sur la surface intérieure (105) de l'élément de boîtier concerné, appuyer avec le bord extérieur ou intérieur de la plaque de ressort (16) sur un des éléments de serrage de telle sorte qu'une transmission de la force de serrage et/ou de freinage de la surface de serrage de l'élément de serrage à l'objet à serrer et/ou à freiner (5) est provoquée et le dispositif (10) change de l'état ouvert à l'état fermé
et/ou
dans lequel le dispositif (10) est conçu de telle sorte que par la ventilation de l'espce de pression supplémentaire (4) ou par l'alimentation du espace de pression supplémentaire (4) avec une surpression, un des éléments de serrage s'éloigne d'une section d'une des surfaces intérieures (105) et/ou la flexion d'au moins une des plaques de ressort (16) des éléments élastiques diminue, et le dispositif (10) change ainsi de l'état ouvert à l'état fermé.
